Europäisches Patentamt

European Patent Office

Office européen des brevets

(11) Publication number: **0 120 908**
**B1**

## (12) EUROPEAN PATENT SPECIFICATION

(45) Date of publication of patent specification: **10.02.88**

(51) Int. Cl.⁴: **B 62 B 1/22,** B 62 B 3/06

(21) Application number: **83903227.3**

(22) Date of filing: **10.10.83**

(86) International application number:
**PCT/NL83/00038**

(87) International publication number:
**WO 84/01548 26.04.84 Gazette 84/11**

(54) **A WHEEL BARROW.**

(30) Priority: **08.10.82 NL 8203920**

(43) Date of publication of application:
**10.10.84 Bulletin 84/41**

(45) Publication of the grant of the patent:
**10.02.88 Bulletin 88/06**

(84) Designated Contracting States:
**AT BE CH DE FR GB LI LU NL SE**

(56) References cited:
**FR-A- 912 030**
**US-A-3 547 288**
**US-A-3 980 190**

(73) Proprietor: **PRINS, Fokko**
**Alting 30**
**NL-9411 XK Beilen (NL)**

(72) Inventor: **PRINS, Fokko**
**Alting 30**
**NL-9411 XK Beilen (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

EP 0 120 908 B1

Courier Press, Leamington Spa, England.

## Description

A wheel barrow comprising a carrier frame, a travelling wheel at one end, connected to said carrier frame by coupling means for movably carrying said carrier frame, a pair of handles at the other end for manually supporting and wheeling the barrow, and a cargo gripping assembly comprising a pair of clamping jaws.

Such a wheel barrow is generally known and is widely employed for manually transporting many types of goods.

A wheel barrow is actually an indispensable and also in the trade of a paver, but precisely in this trade, has clear limitation as well. Though a wheel barrow is naturally a highly useful aid in the transport of sand, being a material used in paving operations, this is clearly less true with regard to the transport of e.g. paving stones from the storage site to the job site. Manual effort is indispensable not only when paving stones have to be loaded, which unlike sand, are not a dumping material, but also during unloading of the wheel barrow, i.e. the paving stones have to be lifted from the wheel barrow, which is soon experienced as heavy labour. This applies all the more to kerbstones, which serve for bounding pavement. Kerbstones are extremely heavy, cannot be lifted by one man and certainly cannot be considered to be dumping material but rather as piece-goods. According, they are transported separately to the job site by wheel barrow. Both loading and unloading takes place substantially entirely by hand, requiring two persons. Furthermore, it is precisely these heavy kerbstones which, at the place where they are positioned, require much adjusting operations for bringing them into the proper position: both as regards the height above the surface level and the relative orientation, and the proper position relative to the horizontal and vertical plane. This adjusting work should also be done manually in a deeply bowed position. It is not surprising that this leads to back complaints to such an extent that such complaints can be considered to be a typical occupational disorder to pavers.

It is an object of the invention to provide an aid which alleviates situations in which heavy lifting operations occur frequently or are even a rule, such as in paving work.

According to the invention, based on the insight that due to the lever principle, the load distribution with a wheel barrow better enables the handling of even very heavy objects, there is provided a wheel barrow of the above described type which is characterized in that said cargo gripping assembly is a mechanical operable lever shearing machine and that a carrier turret is positioned on the carrier frame and is affixed thereto, said mechanical operable lever shearing machine is suspended in the carrier turret at the end opposite the load bearing end comprising the pair of clamping jaws.

It is true that in US—A—3 980 190 there is disclosed a wheeled hand barrow for handling paving slabs, supporting a gripping means permitting the slab to be gripped and handled therewith. However, the known wheel barrow lacks adjusting means for the cargo by means of which it will be possible to carry out adjusting operations with respect to the height above the surface level and without the necessity to disconnect the said adjusting means from the wheel barrow. If with the known wheel barrow the cargo, i.e. the paving slab, is to be laid down on the ground, the paver while carrying the slab's weight has to lower the carrier frame with the pair of handles almost to the ground itself and in doing so has to bow his back deeply. It is such an action which should anyhow be avoided because it favours back complaints which as is mentioned hereinabove, is considered to be an occupational disorder for pavers. By providing the carrier frame of the wheel barrow according to the invention with a turret like construction there is obtained the possibility to have a mechanical operable lever shearing machine suspended in this turret and through this combination of constructional measures there is, within broad limits, realised a continuous adjustability in height above the surface level minimizing the necessity for the paver to bend his back.

By using a lifting clamp according to the invention there is made good use of the known per se property thereof and the clamping force exerted on the article to be lifted by means of the clamping jaws is adjusted automatically in proportion to the weight of the article.

In order to provide for the possibility of carrying out adjusting operations, as customary in the installation of a kerbstone, it is ensured that the suspension of the lifting clamp in the carrier turret effects that the cargo clamped between the clamping jaws is moved in directions that can be resolved in the horizontal plane into perpendicular directions and furthermore is rotatable about a vertical axis. To this effect, the lifting clamp may be suspended in the carrier turret by means of a ball joint.

The cargo accommodating means of the wheel barrow according to the invention may be fitted with a single lifting clamp. However, they may also be an assembly of two coacting jointed tongs, which are interconnected by the pair of clamping jaws at the respective load bearing end thereof in a manner moving the clamping jaws away and towards each other through extension and contraction of the jointed tongs. In this case, for the purpose of a convenient operation of the cargo accommodating means during manoeuvring therewith for finding the best position of the pair of clamping jaws relative to the cargo to be carried, or of the cargo carried in respect of the required arrangement thereof at the required destination, said cargo accommodating means can be provided with an orienting rod affixed thereto, with which the required clamping direction of the pair of clamping jaws is adjustable by rotation of said accommodating means via the ball joint.

For ease of handling, it is desirable for the wheel barrow according to the invention, as customary with wheel barrows in general, to have, in addition to the travelling wheel, further supporting means by means of which, in coaction with the travelling wheel, the wheel barrow can be positioned in a rest position on the ground. The supporting means may be designed in such a way that they are integral with an assembly by means of which the gripping position of the pair of clamping jaws on the load to be lifted can be adjusted in height. To this effect, the assembly may comprise a substantially rectangular supporting frame consisting of links, which frame is connected on one side to the carrier frame in a manner bridging the distance between the handles via the corresponding link, and at the opposite side of the supporting frame, can be supported on the ground using the links of the other pair of supporting-frame sides as standards, and furthermore, an upwardly directed supporting leg lying substantially in the vertical plane and fitted with a valve joint, said leg being fixedly connected at one end to a connecting rod fixedly connected to the carrier frame between the handles, and the other end of said leg being pivotally connected to the corresponding frame link of the supporting frame side adapted to be supported on the ground and the links serving as standards of the supporting frame each being fitted in corresponding places with a pivot joint.

When in practice, a wheel barrow constructed according to this embodiment of the invention has been manoeuvred so that the pair of clamping jaws is above the cargo to be carried and transported, e.g. a kerbstone, it is possible, by means of a grip effectively connected to the linkage, to displace the pair of clamping jaws downwardly until a substantially workable gripping position about the cargo lying on the ground and to be lifted, e.g. a kerbstone, is occupied. The extent of workability of the gripping position relative to the kerbstone, thus obtained via what could be called a coarse adjustment, is determined among other things by the degree in which the lifting clamp can be extended when this is in freely suspended position and also by the height of the kerbstone above the ground. If, judged by the distance of the pair of clamping jaws from the soil, a deeper gripping position is desired, the assembly of hinged supporting frame and hinged supporting leg, within certain limits, offers a further possibility therefor. To this effect, the valve joint of the supporting leg is bent from its supporting or stretched position so that, hinging in the joints accommodated in the standards of the supporting frame, the angle of inclination between the plane of the supporting frame and the ground becomes smaller and so the carrier frame and hence the pair of clamping jaws are moved further towards the ground until the definite gripping position is occupied. While adjusting with the grip in such a way that the clamping jaws engage with the kerbstone on opposite sides thereof, the kerbstone is lifted over a limited distance, clear of the ground, when the hinged toggle of the supporting leg is again returned to the supporting or stretched position. By further lifting the carrier frame of the wheel barrow at the handles, the supporting frame and the castor wheels connected thereto will also get clear of the ground and the wheel barrow is further freely transportable.

With a view to a reasonable load distribution during the lifting of wheel barrow at the handles, the travelling wheel of the wheel barrow is attached normally, seen in the direction of travel, far to the front to the carrier frame. As a result, the cargo cannot be brought close to a wall. In order to deal with this situation, in a preferred embodiment of the invention the handles are connected to the further part of the carrier frame so as to be axially removable therefrom and the carrier frame is provided on opposite sides of the longitudinal median plane of the wheel barrow, at the side of the travelling wheel, with members wherein the removed handles can be inserted so as to be axially removable therefrom. Since the castor wheels are much closer to the lifting clamp, the cargo can be brought much closer to the wall by reversing the handles, wheeling the wheel barrow on the two castor wheels, and pushing and steering the travelling wheel by means of the reversed handles, and so manoeuvring it to the required location. For instance, the installation of grates in cow-houses near walls can thus be realized quite well, while it is also possible in this manner to position the grates above a gulley.

A further possibility of control to bring the cargo, such as a kerbstone, in the proper starting position for its subsequent deposition at the required destination can be found by incorporating an adjusting means in the connection of the pair of clamping jaws to the jointed tongs, with which the relative position of the clamping jaws is adjustable. If the relative positions of the clamping jaws, which are normally parallel to each other in the horizontal plane, are altered by the adjusting means in such a way that they come to be positioned at different levels, while maintaining their mutual parallel relationship, then the cargo to be lifted by means of such a pair of clamping jaws, e.g. a kerbstone, will be turned during the lifting about its longitudinal axis through a given angle.

If desired, the form of the clamping jaws can be adjusted to the form of the cargo to be carried: e.g. curved kerbstones, which are employed in places where a pavement makes a bend, can be effectively lifted by a pair of clamping jaws curved accordingly.

With the wheel barrow according to the invention, heavy articles such as kerbstones, can be lifted by one person and be transported to the required destination and be installed there in the proper position with minimal effort and great accuracy. A further major advantage of the wheel barrow according to the invention is that it can be used for selectively removing a single kerbstone from an installed row of such kerbstones, e.g. for its replacement by another in case of damage.

Some embodiments of the wheel barrow according to the invention will now be described, by way of example, with reference to the accompanying drawings, in which:

Fig. 1 is a side view of the wheel barrow with which a kerbstone is lifted by cargo accommodating in the form of an assembly of two coacting jointed tongs;

Fig. 2 is an elevational view on the line II—II of Fig. 1;

Fig. 3 is a side view of the wheel barrow including cargo accommodating means comprising a single jointed tong; and

Fig. 4 is a section on the line IV—IV of Fig. 3.

In the drawings, a supporting frame is shown at (1), which is connected on one end to travelling wheel (2) and on the other end and terminates in two handles (15 and 16). The carrier turret (3) is welded with its four legs (4) in pairs to the intermediate links (23, 24) of the supporting frame (1). The lifting clamp (5), composed of two jointed tongs (7, 8) suspended symmetrically relative to the longitudinal median plane of the wheel barrow and coacting in parallel relationship, said tongs being interconected at the bottom via the pair of clamping jaws (6,6'), is suspended in the carrier turret via a combination of a bearing plate (9) and swivelling ball (19).

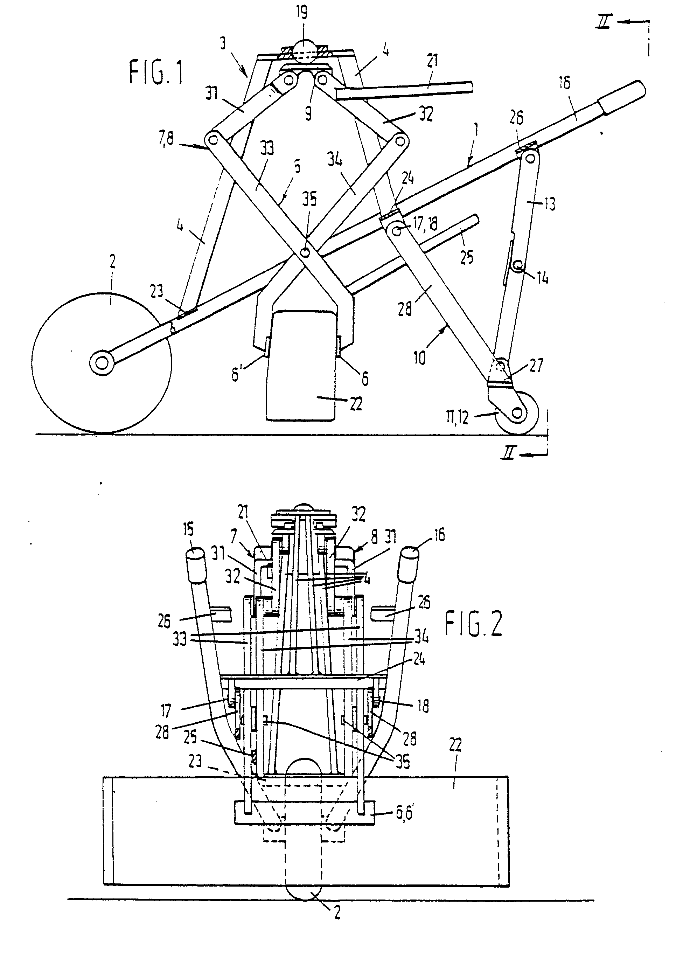

In addition to the travelling wheel (2), supporting frame (1) rests on the ground by means of supporting frame (10), said supporting frame (10) comprising castor wheels (11, 12), not shown in Fig. 2, while (13 and 14) represent pivot joints (17, 18) provided in the standards.

The supporting frame (10) is maintained in its supporting position by means of the supporting rod 13 fitted with a valve joint (14) and pivotally connected at its ends to intermediate link (26) and the lower link (27) of the supporting frame (10), respectively.

The wheel barrow can be gripped, lifted and transported by the barrow-man at the handles (15 and 16).

At (21) is shown an orienting rod which is fixedly connected to the jointed tongs (7) and hence to the lifting clamp (5) and which can be swivelled to turn the lifting clamp by means of the swivelling ball (19), within given limits so as to find the proper position of the kerbstone (22).

When the wheel barrow is to be wheeled in unloaded condition, the lifting clamp (5) can be brought in lifted position by the grip (25) affixed thereto and be fixed therein by suspending the grip (25) from the supporting frame (1) via suspension means, not shown.

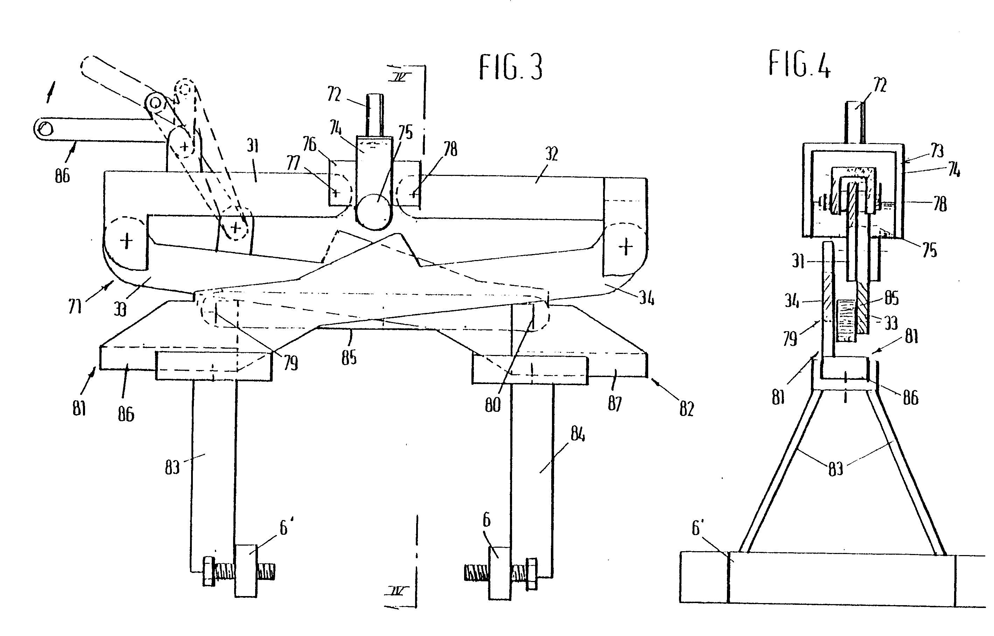

Figs. 4 and 5 (in which reference numerals identical to those used in Fig. 1 and Fig. 2 relate to corresponding members) of the drawings show a second embodiment of a lifting clamp (70) which can be combined to form a wheel barrow according to the invention, said embodiment comprising a single pair of jointed tongs (71) only.

The lifting clamp (70) as shown in Fig. 3 is suspended in the carrier turret, which is attached to the supporting frame of a wheel barrow, analogously to the lifting clamp 5 in Fig. 1, in longitudinal direction of the supporting frame.

The way in which the lifting clamp (70) is hung in the carrier turret, however, is different here, using not a ball joint but a suspension construction (73). By means of stud (72), connected to the suspension construction (73), and a bolt-and-nut connection, lifting clamp (70) is suspended within the carrier turret from the top platform thereof, being rotatable about a vertical axis. The suspension construction (73) itself has the form of an assembly consisting of a U-shaped bracket (74) pivotally connected to a shaft (75), mounted at its end faces between the legs of the U-shaped bracket, as well as a supporting beam (76), U-shaped in cross-section, which on the one hand, has its end portions pivoted to the end portions of the arms (31 and 32) in the pivots (77, 78) and on the other hand is supported on the shaft (75), being thus supported by it so as to be rotatable about the shaft.

The arms (33 and 34) are interconnected in two pivots (79, 80) by means of the connecting rod (85), in which pivots moreover there are mounted the slides (81, 82), made of angle section, whose sides (86, 87) are each provided with equally spaced apart holes. The carrier frames (83, 84), carrying at the ends thereof the clamping jaws 6,6', are suspended via said holes by means of bolt-and-nut connections.

By choosing the suspension point of the carrier frames (83, 84) in another corresponding pair of holes in the sides (86, 87), the distance between the carrier frames (83, 84) and hence between the clamping jaws (6,6'), can be adjusted to the width of the article to be lifted, such as a kerbstone, for obtaining an optimal clamping force.

The arms (31 and 33) are interconnected with an overlap combination closure (86), by means of which the jointed tongs (71) can be locked in contracted condition, as shown in Fig. 3. In this position, the wheel barrow can be wheeled in non-loaded condition and the carrier frame of the wheel barrow, in the rest position, can be supported on the ground by means of the lifting clamp (70) and the pair of clampings jaws 6,6', which renders separate supporting means, such as the supporting frame (10) and the coacting supporting rod (13) (Fig. 1) superfluous, which reduces the dead weight of the wheel barrow according to the invention.

The suspension construction (73) and the pivot joint thereof in the pivots (77 and 78) to the arms 31 and 32 contribute to the feature when the wheel barrow is lifted and the handles for transporting a load clamped between the clamping jaws (6,6'), the lifting clamp (70) swings forwardly, i.e. in the sense away from the barrow-man, so that the weight to be carried is displaced more towards the travelling wheel (2) (Fig. 1).

Naturally, modifications can be made to the wheel barrow according to the invention, as described in the above and shown in the drawings, without departing from the scope of the appended claims.

## Claims

1. A wheel barrow comprising a carrier frame (1), a travelling wheel (2) at one end, connected to said carrier frame by coupling means for movably carrying said carrier frame, a pair of handles (16) at the other end for manually supporting and wheeling the barrow, and a cargo gripping assembly (5) comprising a pair of clamping jaws (6,6'), characterized in that said cargo gripping assembly is a mechanical operable lever shearing machine (5) and that a carrier turret (3) is positioned on the carrier frame and is affixed thereto, said mechanical operable lever shearing machine (5) is suspended in the carrier turret at the end opposite the load bearing end comprising the pair of clamping jaws (6,6').

2. A wheel barrow according to claim 1, characterized in that the suspension of the lifting clamp in the carrier turret is effected via a ball joint (19).

3. A wheel barrow according to claims 1—2, characterized in that the cargo accommodating means is an assembly of two coacting jointed tongs (7, 8), which, at the respective load bearing ends thereof, are interconnected by the pair of clamping jaws (6,6') in a manner moving the clamping jaws towards and away from each other by extending and contracting the jointed tongs.

4. A wheel barrow according to claims 1—3, characterized in that the cargo accommodating means comprise an orienting rod (21) fixedly connected thereto, with which the required clamping direction of the pair of clamping jaws (6,6') is adjustable by rotation of the cargo accommodating means via the ball joint (19).

5. A wheel barrow according to claims 1—4, the carrier frame of which is provided with further supporting means through which, in conjunction with the travelling wheel, the wheel barrow, in the rest position, can be positioned on the ground, characterized in that the supporting means are associated with an assembly with which the gripping position of the pair of clamping jaws about the load to be lifted is adjustable in height.

6. A wheel barrow according to claim 5, characterized in that the assembly comprises a substantially rectangular supporting frame (10) consisting of links, said frame being connected on one side to the carrier frame in a manner bridging the distance between the handles via the corresponding link (24) and at the opposite side of the supporting frame, can find support on the ground, using the links 28 of the other pair of supporting-frame sides as standards, and furthermore, an upwardly directed supporting leg (13) lying substantially in the vertical plane and fitted with a valve joint (14), said leg being connected at one end to a connecting rod (26) fixedly connected to the carrier frame 1 between the handles (15, 16), and the other end of said leg being pivotally connected to the corresponding link (27) of the supporting frame side adapted to be supported on the ground and the links functioning as standards 28 of the supporting frame each being provided in corresponding places with a pivot joint (17).

7. A wheel barrow according to claim 6, characterized in that at the ground-supportable side the supporting frame (10) is provided with a castor wheel (11) adjacent its corners.

8. A wheel barrow according to claims 1—7, characterized in that the handles (15, 16) are connected to the further part of the carrier frame so as to be axially removable therefrom and the carrier frame, on opposite sides of the longitudinal median plane of the wheel barrow, at the end of the travelling wheel, comprises tubular members wherein the removed handles can be inserted so as to be axially removable therefrom.

9. A wheel barrow according to claims 1—8, charaacterized in that the connection of the pair of clamping jaws to be jointed tongs accommodates an adjusting means with which the relative position of the clamping jaws is adjustable.

10. A wheel barrow according to claims 1—9, characterized in that the form of the clamping jaws is adjusted to the form of the cargo to be carried.

11. A wheel barrow according to claim 1, in which the carrier frame comprises further supporting means which, in coaction with the travelling wheel, enable the wheel barrow to be arranged in a rest position on the ground, characterized in that the lifting clamp constitutes the supporting means coacting with the travelling wheel (2).

12. A wheel barrow according to claim 11, characterized in that the lifting clamp comprises a single pair of jointed tongs (71) including a pair of coacting arms (31, 33 and/or 32, 34) interconnected by locking means arranged to lock the tongs (71) in contracted condition.

13. A wheel barrow according to claim 12, characterized in that said locking means is a closure member (86) of the combination closure principle.

## Patentansprüche

1. Schubkarre mit einem Trägerrahmen (1), einem Laufrad (2) an einem Ende, das mit dem Trägerrahmen durch Kupplungsmittel für das bewegliche Tragen des Trägerrahmens verbunden ist, einem Paar von Handgriffen (16) am anderen Ende zum manuellen Halten und Verfahren des Schubkarrens, und einer Lastgreifanordnung (5), die ein Paar von Klemmbacken (6, 6') umfaßt, dadurch gekennzeichnet, daß die Lastgreifanordnung eine mechanisch betätigbare Hebelscherenmaschine (5), und daß ein Trägerturm (3) auf dem Trägerrahmen positioniert und daran befestigt ist, wobei die mechanisch betätigbare Hebelscherenmaschine (5) an dem Ende im Trägerturm aufgehängt ist, das dem lasttragenden Ende entgegengesetzt liegt, das das Paar von Klemmbacken (6, 6') umfaßt.

2. Schubkarre nach Anspruch 1, dadurch gekennzeichnet, daß die Aufhängung der Hebeklemme im Trägerturm über ein Kugelgelenk (19) erfolgt.

3. Schubkarre nach den Ansprüchen 1 bis 2, dadurch gekennzeichnet, daß das lastaufnehmende Mittel eine Anordnung von zwei zusammenwirkenden, miteinander verbundenen Zangen (7, 8) ist, die an den jeweiligen lasttragenden Enden durch das Paar von Klemmbacken (6, 6') derart miteinander verbunden sind, daß sie die Klemmbacken aufeinander zu- und voneinander wegbewegen, indem die angelenkten Zangen aus- und eingefahren werden.

4. Schubkarre nach den Ansprüchen 1 bis 3, dadurch gekennzeichnet, daß das lastaufnehmende Mittel eine fest daran angeschlossene Ausrichtstange (21) umfaßt, mit der die erforderliche Klemmrichtung des Paares von Klemmbacken (6, 6') durch Drehen des lastaufnehmenden Mittels über das Kugelgelenk (19) einstellbar ist.

5. Schubkarre nach den Ansprüchen 1 bis 4, dessen Trägerrahmen mit weiteren Stützmitteln versehen ist, durch die in verbindung mit dem Laufrad der Schubkarren in der Ruheposition auf dem Grund positioniert werden kann, dadurch gekennzeichnet, daß die Stützmittel zu einer Anordnung gehören, mit der die Greifposition des Paares von Klemmbacken um die anzuhebende Last höheneinstallbar ist.

6. Schubkarre nach Anspruch 5, dadurch gekennzeichnet, daß die Anordnung umfaßt: einen im wesentlichen rechtwinkligen, Lenker umfassenden Stützrahmen (10), der an einer Seite mit dem Trägerrahmen auf eine Weise verbunden ist, daß er den Abstand zwischen den Handgriffen über den entsprechenden Lenker (24) überbrückt und an der entgegengesetzten Seite des Stützrahmens eine Abstützung am Boden findet, indem Lenker (28) des anderen Paares von Stützrahmenseiten als Stützen verwendet werden, und weiterhin einen nach oben gerichteten Stützarm (13), der im wesentlichen in der Vertikalebene liegt und mit einem Klappgelenk (14) versehen ist, wobei der Stützarm an einem Ende mit einer Verbindungsstange (26) verbunden ist, die fest am Trägerrahmen (1) zwischen den Handgriffen (15, 16) angebracht ist, wobei das andere Ende des Stützarmes drehbar am entsprechenden Lenker (27) der am Boden abzustützenden Stützrahmenseite angeschlossen ist, wobei die Lenker als Stützen (28) für den Stützrahmen funktionieren, von denen jeder an entsprechenden Stellen mit einem Drehgelenk (17) versehen ist.

7. Schubkarre nach Anspruch 6, dadurch gekennzeichnet, daß die sich am Grund abstützende Seite des Stützrahmens (10) in der Nähe der Ecken mit einem Lenkrad (11) versehen ist.

8. Schubkarre nach den Ansprüchen 1 bis 7, dadurch gekennzeichnet, daß die Handgriffe (15, 16) mit dem weiteren Teil des Trägerrahmens verbunden sind, um so davon axial abnehmbar zu sein, und daß der Trägerrahmen an entgegengesetzten Seiten der Längsmittelebene des Schubkarrens an dem Ende des Laufrades rohrförmige Teile umfaßt, in die die abnehmbaren Handgriffe eingesetzt werden können, um so daraus axial abnehmbar zu sein.

9. Schubkarre nach den Ansprüchen 1 bis 8, dadurch gekennzeichnet, daß die Verbindung des Paares von Klemmbacken zu den angelenkten Zangen Einstellmittel enthält, mit denen die Relativlage der Klemmbacken einstellbar ist.

10. Schubkarre nach den Ansprüchen 1 bis 9, dadurch gekennzeichnet, daß die Form der Klemmbacken auf die Form der zu tragenden Last einstellbar ist.

11. Schubkarre nach Anspruch 1, bei dem der Trägerrahmen weiterhin Stützmittel umfaßt, die in Zusammenwirkung mit dem Laufrad eine Anordnung des Schubkarrens in einer Ruhestellung auf dem Boden ermöglichen, dadurch gekennzeichnet, daß die Hebeklemme die Stützmittel bildet, die mit dem Laufrad (2) zusammenwirken.

12. Schubkarre nach Anspruch 11, dadurch gekennzeichnet, daß die Hebeklemme ein einzelnes Paar von einander angelenkten Zangen (71) umfaßt, die ein Paar von zusammenwirkenden Armen (31, 33 und/oder 32, 34) umfassen, die durch Verriegelungsmittel miteinander verbunden sind, die so angeordnet sind, die Zangen (21) im eingefahrenen Zustand zu verriegeln.

13. Schubkarre nach Anspruch 12, dadurch gekennzeichnet, daß die Verriegelungsmittel ein Schließglied (86) des Kombinationsschließprinzips darstellen.

**Revendications**

1. Brouette comprenant un cadre porteur (1), une roue de transport (2) à une extrémité, reliée audit cadre porteur par des moyens de liaison pour supporter de façon mobile ledit cadre porteur, une paire de poignées (16) à l'autre extrémité pour manuellement supporter et rouler la brouette, et un ensemble (5) de préhension d'un chargement, comprenant une paire de joues de serrage (6, 6'), caractérisée en ce que ledit ensemble de préhension de chargement est une machine (5) à leviers en tenaille et à actionnement mécanique, et en ce qu'une tourelle de support (3) est placée sur le cadre porteur et est fixée à celui-ci, ladite machine (5) à levier en tenaille et à actionnement mécanique est suspendue dans la tourelle de support à son extrémité opposée à l'extrémité qui porte la charge et comporte la paire de joues de serrage (6, 6').

2. Brouette selon la revendication 1, caractérisée en ce que la suspension du blocage de levage dans la tourelle de support est effectuée par l'intermédiaire d'un joint à bille (19).

3. Brouette selon la revendication 1 ou 2, caractérisée en ce que les moyens d'adaptation du chargement est un ensemble de deux langues (7, 8) jointes et coopérantes qui à leur extrémité de support de charge respective sont interconnectées par la paire de joues de serrage (6, 6') d'une manière à permettre le déplacement des joues de serrage l'une vers l'autre et l'une au loin de l'autre par extension et contraction des langues jointes.

4. Brouette selon l'une des revendications 1 à 3, caractérisée en ce que les moyens d'adaptation du charagement comprennent une tige d'orientation (21) connectée de façon fixe à ceux- ci, à l'aide desquels la direction de serrage exigée de la paire de joues de serrage (6, 6') est ajustable par rotation des moyens d'adaptation du chargement par l'intermédiaire du joint à bille (19).

5. Brouette selon l'une des revendications 1 à 4, le cadre porteur de laquelle est pourvu de moyens de support supplémentaires à l'aide desquels, ensemble avec la roue de transport, la brouette dans sa position de repos peut être positionnée sur le sol, caractérisée en ce que les moyens de support sont associés à un ensemble par lequel la position de préhension de la paire de joues de serrage sur la charge à soulever est ajustable en hauteur.

6. Brouette selon la revendication 5, caractérisée en ce que l'ensemble comprend un cadre de support (10) sensiblement rectangulaire, constitué de bielles ou éléments de liaison, ledit cadre étant relié à une extrémité au cadre porteur d'une façon à former un pontage de la distance entre les poignées à l'aide de la bielle correspondante (24) et à l'extrémité opposée de cadre de support peut prendre appui sur le sol, en utilisant les biélles (28) de l'autre paire des côtés de cadre de support comme montants ou supports, et, en outre, une jambe de support (13) s'étendant vers le haut et se trouvant sensiblement dans la plan vertical et assujettie à un joint à bille (14), ladite jambe étant connectée à une extrémité à une tige de liaison (26) reliée de façon fixe au cadre porteur (1) entre les poignées (15, 16), et l'autre extrémité de ladite jambe étant reliée de façon pivotante à la bielle correspondante (27) du côté de cadre de support, adaptée pour être supportée sur le sol, et les bielles ou éléments de liaison fonctionnant comme montants ou supports (28) du cadre de support étant pourvues chacune à des endroits correspondants d'un joint à tourillon (17).

7. Brouette selon la revendication 6, caractérisée en ce que le côté pouvant prendre appui sur le sol du cadre de support (10) est pourvu d'une roue de direction (11) adjacente à ses coins.

8. Brouette selon l'une des revendication 1 à 7, caractérisée en ce que les poignées (15, 16) sont reliées à une partie supplémentaire du cadre porteur de façon à pouvoir être axialement retirées de celui-ci et le cadre porteur, à des côtés opposés du plan médian longitudinal de la brouette, à l'extrémité de la roue de transport, comprend des organes tubulaires dans lequels les poignées retirées peuvent être introduites de façon à pouvoir être axialement retirées de ceux-ci.

9. Brouette selon l'une des revendications 1 à 8, caractérisée en ce que la liaison de la paire de joues de serrage aux langues jointes s'adapte à un moyen d'ajustement par lequel la position relative des joues de serrage est ajustable.

10. Brouette selon l'une des revendications 1 à 9, caractérisée en ce que la forme des joues de serrage est adaptée ou ajustée à la forme du chargement à porter.

11. Brouette selon la revendication 1, dans laquelle la cadre porteur comporte d'autres moyens de support qui, en coopération avec la roue de transport, rendent la brouette apte à être arrangée dans une position de repos sur le sol, caractérisée en ce que le blocage de levage constitue le moyen de support coopérant avec la roue de transport (2).

12. Brouette selon la revendication 11, caractérisée en ce que le blocage de levage comprend une seule paire de langues jointes (71) comportant une paire de bras coopérants (31, 33 et/ou 32, 34) interconnectés par des moyens de blocage arrangés de façon à bloquer les langues (71) en une position contractée.

13. Brouette selon la revendication 12, caractérisée en ce que le moyen de blocage précité est un organe de fermeture (86) du type fermeture de combinaison.

FIG.1

FIG.2

FIG. 3

FIG. 4

0 120 908